# EUROPEAN PATENT APPLICATION

(11) **EP 4 160 042 A1**
(43) Date of publication of application: **05.04.2023**
(21) Application number: 21200169.7
(22) Date of filing: 30.09.2021
(51) Int. Cl.: F16D 55/226, B23Q 5/04, B23C 3/00

(54) **A MACHINE TOOL HEAD**

(71) Applicant: Meritor Heavy Vehicle Braking Systems (UK) Limited, Cwmbran, Gwent NP44 3XU (GB)
(72) Inventor: Norman, Mark, Cwmbran, NP44 3XU (GB); Morris, Mathew, Cwmbran, NP44 3XU (GB); Philpott, Daniel, Troy, MI 48084 (US); Yoon, Youngchool, 689-892 Onsan-Eup (KR)
(74) Representative: Ayre, Nicola Unity

(57) **Abstract**

A machine tool head for machining internal surfaces of a cavity defined by a monobloc caliper for a disc brake assembly. The tool head is an angle head comprising a cutting means for machining said internal surfaces and a drive train configured to connect the cutting means to an actuator. The cutting means comprises a first cutting edge configured for cutting as the tool head is moved in a first direction and a second cutting edge configured for cutting as the tool head is moved in a second direction.

## Description

### FIELD OF THE INVENTION

The present invention relates to a machine tool head for machining a monobloc caliper for a disc brake assembly, and to a method of machining a monobloc caliper for a disc brake assembly, in particular for a disc brake assembly for a heavy vehicle, such as a truck or bus.

### BACKGROUND OF THE INVENTION

A caliper for a disc brake may be a monobloc caliper, i.e. a caliper that is cast as a single piece. A monobloc caliper is commonly machined after casting, in order to provide certain features, and/or to better define features and to provide the level of tolerance required.

A monobloc caliper has an internal cavity intended to receive a brake disc or rotor and brake pads on either side of the rotor. This internal cavity defines a number of internal features which must be machined after casting. Access for machining such internal features is not possible for conventional, straight, cutting tools due to the obstruction to the typical tool path caused by the bridge beam of the caliper.

In particular, the internal cavity defines surfaces for supporting the bearings of a brake operating shaft. These bearing support surfaces must be machined to a fine tolerance, in particular with regards to the position of the bearing support surfaces in respect to one another, so that the operating shaft can be properly located.

It is known to machine the internal surfaces of the monobloc caliper using an angle head tool, which can be used to gain access to the internal surfaces via a pad gap of the monobloc caliper. However, the required radius of the bearing support surfaces in combination with the inaccessibility of the location of the bearing support surfaces makes the bearing support surfaces particularly difficult to machine. Significant manipulation of the angle head tool is required to reach all of the internal surfaces. This slows the machining process, decreasing efficiency. When machining bearing support surfaces, the angle head tool must be removed from the caliper cavity and re-orientated between machining in a first direction and machining in a second direction. Again, this is time-consuming and inefficient. In addition, removal of the tool head from the cavity between machining operations makes it more difficult to achieve the fine tolerance with regards to the position of the two bearing support surfaces in relation to one another that is required. In order to achieve the necessary fine tolerance, a long cut is needed, increasing the cost of manufacture.

Increasing the distance between the cutter of a tool and the tool actuator may improve manoeuvrability of the tool head. However, such an increase can also increase vibration of the tool head. Machine tool vibration or chatter is detrimental to achieving fine tolerances and high quality surface finish. Additionally, high levels of chatter may result in damage to the cutting tool. It is known to reduce cutting speed and feed speed to reduce the negative effects of chatter. However, this results in increased overall cost of manufacture due to increased manufacturing time.

Cutters such as a ball nose cutter may be used. However, such a cutter would have only a line contact with the surface to be cut, and it can be difficult with such a cutter to achieve the required radius of the bearing support surfaces. Significant tool manipulation is required in order to machine the bearing support surfaces to the necessary tolerance.

The present invention seeks to overcome or at least mitigate the problems of the prior art.

### SUMMARY OF THE INVENTION

According to a first aspect of the present teachings, there is provided a machine tool head for machining internal surfaces of a cavity defined by a monobloc caliper for a disc brake assembly. The tool head is an angle head comprising a cutting means for machining said internal surfaces and a drive train configured to connect the cutting means to an actuator. The cutting means comprises a first cutting edge configured for cutting as the tool head is moved in a first direction and a second cutting edge configured for cutting as the tool head is moved in a second direction.

Advantageously, the tool head having two cutting edges allows the tool to cut while traversing in two directions. This is of particular advantage in a tool head for machining the internal surfaces of the cavity of a monobloc caliper, where there is little room for manoeuvre. Providing two cutting edges, and thus enabling the tool head to machine in two different directions, allows the tool head to remain within the cavity between cutting operations, rather than having to be removed from the cavity for repositioning.

Additionally, there is less tool manipulation required compared to the standard angle head tool with a single cutting edge. Not only does this simplify the manufacturing process, there is also less opportunity for error, meaning finer tolerances may be possible.

Each of the first and second cutting edges may define an axis of rotation, and the first and second cutting edges may be co-axial.

Advantageously, providing first and second co-axial cutting edges allows machining of the internal surface or surfaces of a face defined by said cavity without the need for re-orientation of the tool head. Where two surfaces such as bearing support surfaces for supporting an operating shaft are to be machined, and the need for re-orientation of the tool head between machining each surface is removed, machining tolerance is improved.

This is particularly advantageous with bearing support surfaces of a caliper, where fine tolerance is required.

The first and second cutting edges may be rotated about the axis of rotation in the same direction, and the first cutting edge may comprise teeth configured for cutting as the tool head is moved in said first direction, and/or the second cutting edge may comprise teeth configured for cutting as the tool head is moved in said second direction.

Advantageously, this arrangement of the cutting edges allows the tool head to be moved and to machine in both the first and second directions.

The tool head may comprise a first rotary cutter comprising the first cutting edge, and a second rotary cutter comprising the second cutting edge.

Advantageously, providing first and second cutters is a simple and effective way of providing first and second cutting edges, and allows some freedom of design. The cutters can be arranged in relation to one another and the remainder of the tool head for optimal machining of the internal surfaces.

The first and second cutters may be co-axial, and the first and second cutters may be keyed to one another, such that the first and second cutters rotate together.

Advantageously, the first and second cutters being keyed to one another allows the cutters to be driven by a shared drive means, and makes the cutting means compact, improving manoeuvrability.

The drive train may comprise:
a spindle configured to connect the drive train to said actuator, wherein the spindle may define a spindle longitudinal axis about which the spindle is configured to rotate; and
a gear train may be configured to connect the spindle to the cutting means; wherein the gear train may comprise a first, extension, arm, and a second arm;
wherein the first arm may be configured to provide a driven connection between the spindle and the second arm, and the second arm may be configured to provide a driven connection between the first arm and the cutting means; and
wherein the first arm may be configured to increase the distance between the spindle and the cutting means in the direction of the spindle longitudinal axis.

Advantageously, increasing the distance between the spindle and the cutting means improves ease of access of the tool head to the internal surfaces of the cavity that are to be machined, and improves manoeuvrability of the tool head.

Using a gear train as opposed to an extended spindle may provide vibration damping and therefore reduce the amount of machine chatter, allowing for a higher quality surface finish. Additionally, the provision of a gear train enables greater control whilst machining the bearing support surfaces.

The first arm may define a first arm longitudinal axis, the first arm longitudinal axis may be substantially parallel to the spindle longitudinal axis.

Advantageously, the first arm extending in the same direction as the spindle effectively increases the distance in that direction between the cutting means and the spindle, so improving manoeuvrability of the tool head.

The first arm may comprise a gear or gears having an axis of rotation at substantially 90° to the spindle longitudinal axis, and the second arm may comprise a series of gears each having an axis of rotation parallel to that of the remaining gears.

Advantageously, the change in axis between the spindle and the gear or gears of the first, extension, arm allows for a suitable gear configuration for the gear train. The orientation of the gear(s) allows drive force to be effectively transferred from the actuator to the cutting means, whilst increasing the distance between the cutting means and the spindle to provide improved manoeuvrability.

The first arm may define a first arm longitudinal axis, and the second arm may define a second arm longitudinal axis, and the second longitudinal axis may be at an angle of between 30° and 150° to the first arm longitudinal axis. The second arm longitudinal axis may be at an angle of between 75° and 105° to the first arm longitudinal axis.

Advantageously, this angle between the arms of the gear train provides the angle of the angle head tool, improving manoeuvrability of the tool head.

According to a second aspect of the present teachings, there is provided a machine tool head for machining internal surfaces of a cavity defined by a monobloc caliper for a disc brake assembly:
wherein the tool head is an angle head; and wherein the tool head comprises:
   a cutting means for machining said internal surfaces; and
   a drive train configured to connect the cutting means to an actuator;
   wherein the drive train comprises:
      a spindle configured to connect the drive train to said actuator, wherein the spindle defines a spindle longitudinal axis about which the spindle is configured to rotate; and
      a gear train configured to connect the spindle to the cutting means;
      wherein the gear train comprises a first, extension, arm, and a second arm;
      wherein the first arm is configured to provide a driven connection between the spindle and the second arm, and the second arm is configured to provide a driven connection between the first arm and the cutting means; and
      wherein the first arm is configured to increase the distance between the spindle and the cutting means in the direction of the spindle longitudinal axis.

Advantageously, increasing the distance between the spindle and the cutting means improves ease of access of the tool head to the internal surfaces of the cavity that are to be machined, and improves manoeuvrability of the tool head.

The first arm may define a first arm longitudinal axis, and the first arm longitudinal axis may be substantially parallel to the spindle longitudinal axis. The first arm may comprise a gear or gears having an axis of rotation at substantially 90° to the spindle longitudinal axis, and the gear train may comprise a series of gears each having an axis of rotation parallel to that of the remaining gears.

Advantageously, the first arm extending in the same direction as the spindle effectively increases the distance in that direction between the cutting means and the spindle, so improving manoeuvrability of the tool head. Advantageously, the change in axis between the spindle and the gear or gears of the first, extension, arm allows for a suitable gear configuration for the gear train. The orientation of the gear(s) allows drive force to be effectively transferred from the actuator to the cutting means, whilst increasing the distance between the cutting means and the spindle to provide improved manoeuvrability.

According to a third aspect of the present teachings, there is provided a method of machining internal surfaces of a monobloc caliper for a disc brake assembly using an angle head machine tool, wherein the tool head has a cutting means comprising first and second cutting edges, the method comprising the steps of:
a) positioning the tool head within a cavity defined by said caliper;
b) machining a first internal surface of said cavity in a first cutting operation; and
c) machining a second internal surface of said cavity in a second cutting operation;
wherein the tool head remains positioned within said cavity between steps b) and c).

Advantageously, keeping the tool head within the cavity between cutting operations reduces the time required for machining.

In the method, the tool head may be positioned in step a) in an operating orientation, in which the cutting operations of b) and c) can be carried out, and the tool head may remain in said operating orientation between b) and c).

Advantageously, keeping the tool head in the same orientation between cutting operations further reduces the time required for machining, and improves tolerance of the machined surfaces in relation to one another.

In the method, step a) may comprise positioning the tool head in a first orientation prior to positioning the tool head within said cavity, locating the tool head within said cavity, and orientating the tool head with respect to said cavity to a second, operating, orientation;
wherein orientation of the tool head with respect to said cavity may be carried out by manipulation of the tool head and/or said caliper.

According to a fourth aspect of the present teachings, there is provided a monobloc caliper for a disc brake assembly produced according to the method of the third aspect.

### BRIEF DESCRIPTION OF THE DRAWINGS

Embodiments will now be described, by way of example only, with reference to the accompanying figures, in which:
Figure 1 is an isometric view of a machine tool head according to an aspect of the teachings;
Figure 2 is a side view of the machine tool head of Figure 1;
Figure 3 is an isometric view of a monobloc caliper with surfaces produced by the method of an aspect of the teachings;
Figure 4 is a cross sectional view through the caliper of Figure 3;
Figure 5 is an isometric view of the machine tool head of Figures 1 and 2 being positioned within the caliper of Figure 3;
Figure 6 is similar to Figure 5, with the machine tool head positioned for machining;
Figure 7 is a cross sectional view through a cutting means of the machine tool head of Figures 1 and 2; and
Figures 8a, 8b and 8c are side views and a top view of the cutting means of the machine tool head of Figures 1 and 2.

### DETAILED DESCRIPTION OF EMBODIMENT(S)

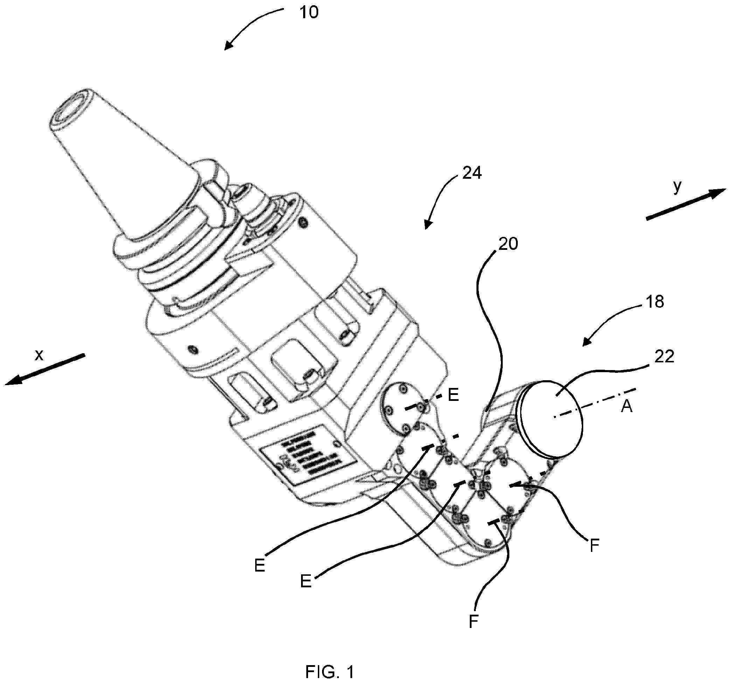

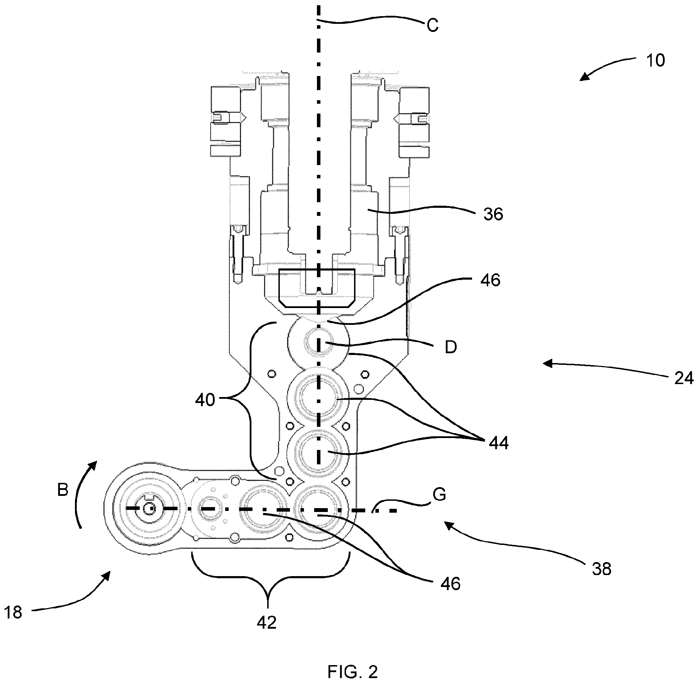

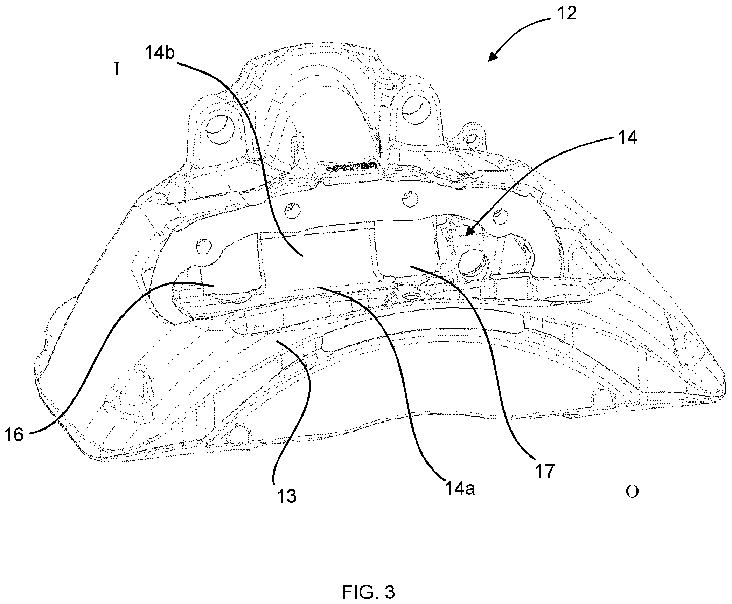

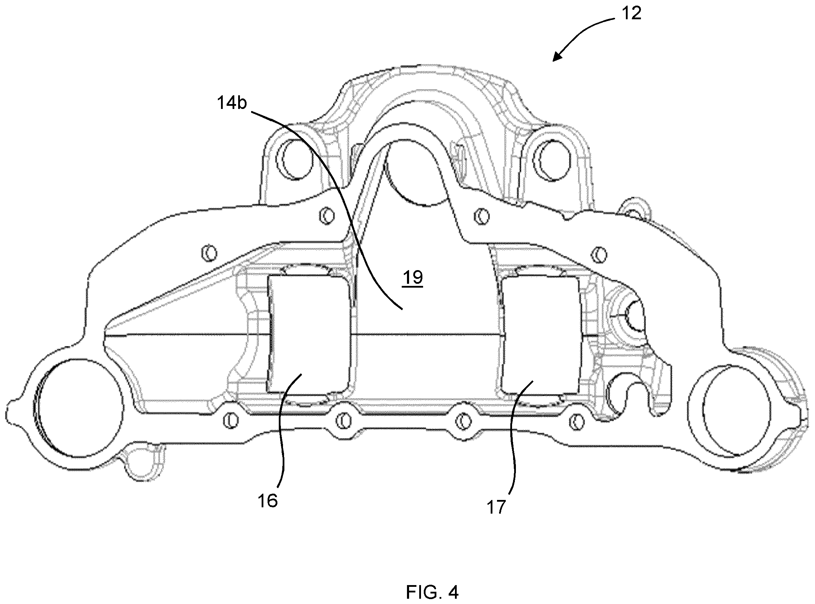

Figures 1 and 2 show a tool head 10 for machining a monobloc caliper for a disc brake assembly. A monobloc caliper of the type to be machined by the tool head 10 is shown in Figures 3 and 4, indicated at 12. As shown in Figures 3 and 4, the caliper 12 has an internal cavity 14. The cavity 14 is configured to receive friction elements (brake pads) and a rotor (not shown) when the caliper 12 is assembled as part of a disc brake assembly.

The caliper 12 has an inboard side I and an outboard side O, as shown in Figure 3. The directions inboard I and outboard O refer to the typical orientation of the disc brake assembly when fitted to a vehicle and with reference to the longitudinal centre line of the vehicle. The radial direction R refers to an orientation with reference to the centre of a rotor, in an assembled disc brake.

The cavity 14 comprises a main chamber 14a and a bearing chamber 14b, where the bearing chamber 14b opens onto and is accessible from the main chamber 14a. The main chamber 14a is intended to receive a brake disc or rotor and brake pads on either side of the rotor. The bearing chamber 14b is defined by an inboard wall of the caliper 12 and is intended to receive bearings of an operating shaft (not shown). The bearing chamber 14b of the cavity 14 is therefore partially enclosed by the caliper 12 and defines an opening onto the main chamber 14a, making the bearing chamber 14b particularly difficult to access.

The caliper 12 defines, within the bearing chamber 14b of the cavity 14, two saddle journals or bearing support surfaces 16, 17. The bearing support surfaces 16, 17 are configured to receive the bearings of the operating shaft of a disc brake when the caliper 12 is assembled in a disc brake assembly.

The tool head 10 of this embodiment is for use in machining the bearing support surfaces 16, 17. The tool head 10 is of the angle head type, i.e. the tool head 10 has a cutting means with a longitudinal axis at an angle to a longitudinal axis of a body of the tool head 10, as explained in further detail below. The tool head 10 being an angle head improves access of the tool head 10 to the bearing support surfaces 16, 17.

The tool head 10 has a cutting means 18 for machining the bearing support surfaces 16, 17, and a drive train 24 for connecting the cutting means 18 to an actuator (not shown). In use, the tool head 10 is connected to and driven by an actuator of a machine tool (not shown).

The cutting means 18 has first and second cutting edges 20, 22. Each of the cutting edges 20, 22 is intended for cutting as the tool head 10 is moved in a particular direction. That is, the first cutting edge 20 is configured for cutting as the tool head 10 is moved in a first direction x, and the second cutting edge 22 is configured for cutting as the tool head 10 is moved in a second direction y (see Figure 1).

As the tool head 10 can cut as it is moved in two different directions, the tool head 10 has increased cutting manoeuvrability. Machining of surfaces within the cavity 14 can take place in two different directions without the removal of the tool head 10 from the cavity 14 for repositioning.

The first and second cutting edges 20, 22 share an axis of rotation A, as shown in Figure 1. The co-axial cutting edges 20, 22 allow the tool head 10 to carry out machining in two directions x, y parallel to the axis A. This is of particular benefit when machining bearing support surfaces 16, 17. As shown in Figures 3 and 4, the bearing support surfaces 16, 17 are located on an inboard face 19 of the bearing chamber 14b of the cavity 14 that opposes the substantially planar opening of the bearing chamber 14b. As the bearing support surfaces are located on the same face 19 of the cavity 14, there is no need for re-orientation of the tool head 10 between a first cutting operation machining the first bearing support surface 16, and a second cutting operation machining the second bearing support surface 17. The bearing support surfaces 16, 17 can be machined in any order.

As there is no need to re-orientate the tool head 10 between cutting operations, the required fine tolerance of the bearing support surfaces 16, 17 can be achieved more efficiently. In particular, efficiency in achieving the fine tolerance of the location of the bearing support surfaces 16, 17 in relation to one another is improved. The time taken to achieve the desired tolerance is reduced, so reducing the cost of manufacture.

The first and second cutting edges 20, 22 are rotated about the axis A in the same direction as one another. In this embodiment, the cutting edges 20, 22 are rotated about the axis A in the direction B as shown in Figure 2.

In alternative embodiments, the cutting edges are configured to rotate about the axis A in the opposite direction.

In this embodiment, the first and second cutting edges 20, 22 are configured for cutting as the tool head 10 is moved in a particular direction. That is, as the first and second cutting edges 20, 22 rotate in the same direction, to allow the first cutting edge 20 to cut as the tool head 10 is moved in the first direction x, and the second cutting edge 22 to cut as the tool head 10 is moved in the second direction y, the cutting edges 20, 22 are each configured for cutting as the tool head 10 is moved in that direction. Each cutting edge 20, 22 has a series of peripheral teeth 30, 32 arranged to cut as the tool head 10 is moved in a particular direction.

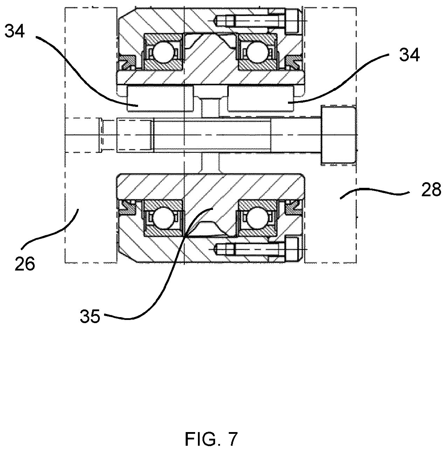

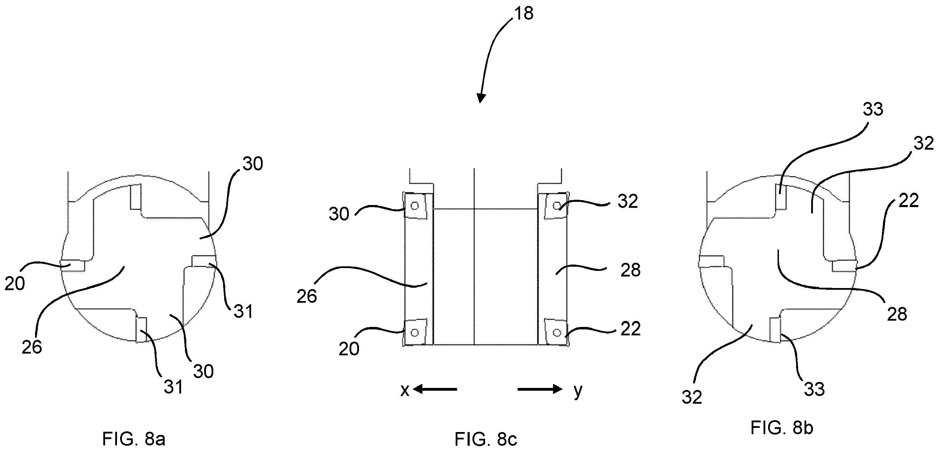

The cutting edges 20, 22 are shown in Figures 7, 8a, 8b and 8c in further detail. In this embodiment, the first cutting edge 20 is provided on a first rotary cutter 26. The second cutting edge 22 is provided on a second rotary cutter 28. The rotary cutters 26, 28 are substantially disc-shaped. The rotary cutters 26, 28 are located on opposing sides of the tool head, advantageously enabling the first and second cutting edges 20, 22 to reach the sides of the bearing support surfaces 16, 17.

In alternative embodiments (not shown), the first and second cutting edges are provided on a single rotary cutter.

The first rotary cutter 26 has a first series of peripheral teeth 30. Each tooth 30 has a cutting tip 31. The tips 31 form the first cutting edge 20. As shown in Figure 8c, the tips 31 extend axially outwardly from the first rotary cutter 26, i.e. away from the centre of the cutting means 18, such that the first cutting edge 20 is configured to cut as the tool head 10 is moved in the first direction x.

Similarly, the second rotary cutter 28 has a series of peripheral teeth 32. Each tooth 32 has a cutting tip 33. The tips 33 form the second cutting edge 22. The tips 33 extend outwardly from the second rotary cutter 28, i.e. away from the centre of the cutting means 18, such that the second cutting edge 22 is configured to cut as the tool head 10 is moved in the second direction y.

The first and second rotary cutters 26, 28 are co-axial and are keyed to one another at a key way 34, as shown in Figure 7. Advantageously, the rotary cutters 26, 28 can therefore be driven by the same gear 35. In this embodiment, the first and second rotary cutters 26, 28 are both keyed to the gear 35. This arrangement is advantageously compact, so increasing the manoeuvrability of the tool head 10.

Figure 2 shows the drive train 24. The drive train 24 includes a spindle 36. The spindle 36 connects the remainder of the drive train to an actuator of a machine tool (not shown). The drive train 24 further includes a gear train 38. The gear train 38 connects the spindle 36 to the cutting means 18, in order to drive the cutting means 18.

The gear train 38 has a first arm 40 and a second arm 42. The first arm 40 transfers drive from the spindle 36 to the second arm 42. The second arm 42 transfers drive to the cutting means 18. The first arm 40 is an extension arm, and is included in the gear train 38 in order to increase the distance between the spindle 36 and the cutting means 18 in the direction of a longitudinal axis C of the spindle 36.

The extension provided by the first arm 40 improves manoeuvrability of the tool head 10 within the bearing chamber 14b of the cavity 14. Ease of positioning the cutting means 18 for machining is improved due to the additional length, and separation from the spindle 36, that the first arm 40 provides.

In this embodiment, the first arm 40 defines a longitudinal axis D that is substantially parallel to the spindle longitudinal axis C. This arrangement of the first arm 40 is effective in providing additional distance between the cutting means 18 and the spindle 36 in the direction of the longitudinal axis C. In alternative embodiments, the longitudinal axis D is at some other suitable angle to the spindle longitudinal axis C, such that the distance between the spindle and the cutting means is increased in the direction of a longitudinal axis C of the spindle.

In this embodiment, as shown in Figures 1 and 2, the first arm 40 is made up of a series of three gears 44. In alternative embodiments, the first arm is made up of fewer gears, or more gears, in order to provide a suitable extension. As shown in Figures 1 and 2, each of the gears 44 has a rotational axis E that extends at substantially ninety degrees to the spindle longitudinal axis C. A pair of bevel gears 46 (see Figure 2) provides a connection between the spindle 36 and the first arm gears 44. In this embodiment, the gears 44 are straight or spur gears. In alternative embodiments, some other suitable type of gear is used.

The change in gear axis of the first arm 40 in relation to the rotational axis C of the spindle 36 improves the strength of the drive train, such that sufficient driving force can be transferred via the gear train 38 to the cutting means 18. The use of the gear train 38 as opposed to extending the spindle 36 provides a greater level of control, and therefore improves the tolerance of the bearing support surfaces 16, 17. Additionally, the gear train 38 provides the required extension and 90° rotation to machine the bearing support surfaces 16, 17, whilst reducing the negative effects of chatter associated with longer rotational members or spindles.

In this embodiment, the second arm 42 of the gear train 38 has further series of gears 46. The second arm gears 46 each have an axis of rotation F parallel to the axis E of the gears of the first arm 40. The second arm gears 46 transfer drive to the gear 35 to which the rotary cutters 26, 28 are keyed.

As the tool head 10 is an angle head, the second arm 42 has a longitudinal axis G that is at an angle in relation to the longitudinal axis D of the first arm 40. In this embodiment, the first and second arms 40, 42 are at an angle to one another of substantially 90°. In alternative embodiments, the first and second arms are at some alternative suitable angle to one another. This angle between the arms 40, 42 of the gear train 38 improves manoeuvrability of the tool head 10 within the cavity 14, providing machining access to the bearing support surfaces 16, 17 despite a bridge beam 13 of the caliper.

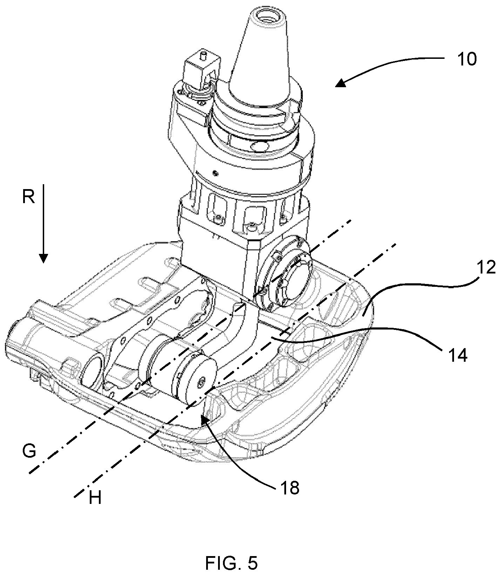

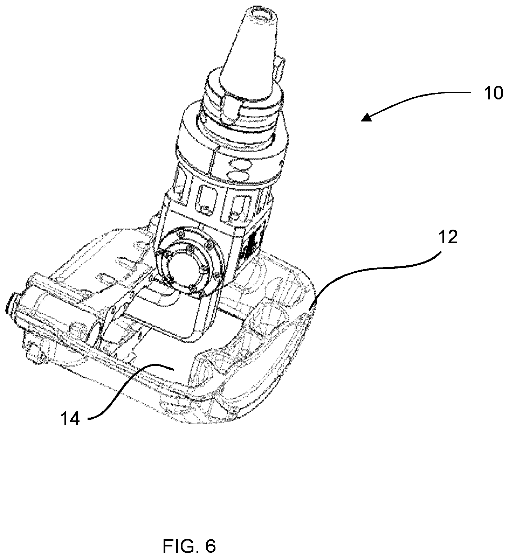

In use, when the tool head 10 is to be used to machine the bearing support surfaces 16, 17, the tool head 10 is manipulated into position as shown in Figures 5 and 6.

The tool head 10 is lowered through the main chamber 14a of the caliper 12 with the tool head 10 in a first orientation where the longitudinal axis G of the second arm 42 is substantially parallel to a longitudinal axis H of the cavity 14, e.g. as shown in Figure 5. The tool head 10 is lowered into the cavity 14 in the direction R indicated in Figure 5, i.e. in a direction radially outwardly from an axis of a rotor, when the caliper 12 is part of an assembled disc brake.

In this embodiment, the caliper 12 is then rotated through 90°, so that the tool head 10 is in an operating orientation in relation to the caliper 12 and extends into the bearing chamber 14b, as shown in Figure 6. That is, the tool head 10 is in an orientation in which machining of the bearing support surfaces 16, 17 can be carried out. In alternative embodiments, the tool head is rotated through 90° in relation to the caliper, so that the tool head is in an operating operation.

Once in the operating orientation of Figure 6, first and second cutting operations are carried out. In the first cutting operation, the first bearing support surface 16 is machined. In the second cutting operation, the second bearing support surface 17 is machined. In alternative embodiments, machining of the surfaces takes place in the opposite order, with the second bearing support surface being machined before the first bearing support surface. In alternative embodiments, machining of the bearing support surfaces is not carried out in two separate cutting operations, but in multiple traverses of the tool head between the bearing support surfaces.

As stated above, as the bearing support surfaces 16, 17 are provided on the same face 19 of the caliper 12 (see Figure 3) there is no need for re-orientation of the tool head 10 in relation to the caliper 12 during machining of the bearing support surfaces 16, 17. The fine tolerance required between the first and second bearing support surfaces 16, 17 can thus efficiently be achieved.

The tool head 10 remains positioned within the cavity 14 during machining of the bearing support surfaces 16, 17. That is, the cutting means 18 remains within an envelope defined by the bearing chamber 14b of the cavity 14 during machining of the bearing support surfaces 16, 17, i.e. the cutting means 18 is not lifted from the cavity 14 until both bearing support surfaces 16, 17 have been machined.

## Claims

1. A machine tool head for machining internal surfaces of a cavity defined by a monobloc caliper for a disc brake assembly:
wherein the tool head is an angle head; and wherein the tool head comprises:
a cutting means for machining said internal surfaces; and
a drive train configured to connect the cutting means to an actuator;
wherein the cutting means comprises:
a first cutting edge configured for cutting as the tool head is moved in a first direction; and
a second cutting edge configured for cutting as the tool head is moved in a second direction.

2. The machine tool head according to claim 1, wherein each of the first and second cutting edges defines an axis of rotation, and wherein the first and second cutting edges are co-axial.

3. The machine tool head according to claim 2, wherein the first and second cutting edges are rotated about the axis of rotation in the same direction, and wherein the first cutting edge comprises teeth configured for cutting as the tool head is moved in said first direction, and/or wherein the second cutting edge comprises teeth configured for cutting as the tool head is moved in said second direction.

4. The machine tool head according to any one of claims 1 to 3, wherein the tool head comprises a first rotary cutter comprising the first cutting edge, and a second rotary cutter comprising the second cutting edge.

5. The machine tool head according to claim 4, wherein the first and second cutters are co-axial, and wherein the first and second cutters are keyed to one another, such that the first and second cutters rotate together.

6. The machine tool head according to any one of claims 1 to 5 wherein the drive train comprises:
a spindle configured to connect the drive train to said actuator, wherein the spindle defines a spindle longitudinal axis about which the spindle is configured to rotate; and
a gear train configured to connect the spindle to the cutting means;
wherein the gear train comprises a first, extension, arm, and a second arm;
wherein the first arm is configured to provide a driven connection between the spindle and the second arm, and the second arm is configured to provide a driven connection between the first arm and the cutting means; and
wherein the first arm is configured to increase the distance between the spindle and the cutting means in the direction of the spindle longitudinal axis.

7. The machine tool head according to claim 6, wherein the first arm defines a first arm longitudinal axis, and wherein the first arm longitudinal axis is substantially parallel to the spindle longitudinal axis.

8. The machine tool head according to claim 7, wherein the first arm comprises a gear or gears having an axis of rotation at substantially 90° to the spindle longitudinal axis, preferably wherein the second arm comprises a series of gears each having an axis of rotation parallel to that of the remaining gears.

9. The machine tool head according to any one of claims 6 to 8, wherein the first arm defines a first arm longitudinal axis, and wherein the second arm defines a second arm longitudinal axis, and wherein the second longitudinal axis is at an angle of between 30° and 150° to the first arm longitudinal axis, preferably wherein the second arm longitudinal axis is at an angle of between 75° and 105° to the first arm longitudinal axis.

10. A machine tool head for machining internal surfaces of a cavity defined by a monobloc caliper for a disc brake assembly:
wherein the tool head is an angle head; and wherein the tool head comprises:
a cutting means for machining said internal surfaces; and
a drive train configured to connect the cutting means to an actuator;
wherein the drive train comprises:
a spindle configured to connect the drive train to said actuator, wherein the spindle defines a spindle longitudinal axis about which the spindle is configured to rotate; and
a gear train configured to connect the spindle to the cutting means;
wherein the gear train comprises a first, extension, arm, and a second arm;
wherein the first arm is configured to provide a driven connection between the spindle and the second arm, and the second arm is configured to provide a driven connection between the first arm and the cutting means; and
wherein the first arm is configured to increase the distance between the spindle and the cutting means in the direction of the spindle longitudinal axis.

11. The machine tool head according to claim 10, wherein the first arm defines a first arm longitudinal axis, and wherein the first arm longitudinal axis is substantially parallel to the spindle longitudinal axis, preferably wherein the first arm comprises a gear or gears having an axis of rotation at substantially 90° to the spindle longitudinal axis, more preferably wherein the gear train comprises a series of gears each having an axis of rotation parallel to that of the remaining gears.

12. A method of machining internal surfaces of a monobloc caliper for a disc brake assembly using an angle head machine tool comprising a tool head, wherein the tool head has a cutting means comprising first and second cutting edges, the method comprising the steps of:
a) positioning the tool head within a cavity defined by said caliper;
b) machining a first internal surface of said cavity in a first cutting operation; and
c) machining a second internal surface of said cavity in a second cutting operation; wherein the tool head remains positioned within said cavity between steps b) and c).

13. The method according to claim 12, wherein the tool head is positioned in step a) in an operating orientation, in which the cutting operations of b) and c) can be carried out, and wherein the tool head remains in said operating orientation between b) and c).

14. The method according to claim 12 or claim 13, wherein step a) comprises positioning the tool head in a first orientation prior to positioning the tool head within said cavity, locating the tool head within said cavity, and orientating the tool head with respect to said cavity to a second, operating, orientation;
wherein orientation of the tool head with respect to said cavity is carried out by manipulation of the tool head and/or said caliper.

15. A monobloc caliper for a disc brake assembly produced according to the method of one of claims 12 to 14.
